# EUROPEAN PATENT APPLICATION

(11) **EP 4 772 927 A1**
(43) Date of publication of application: **08.07.2026**
(21) Application number: 26150235.5
(22) Date of filing: 05.01.2026
(51) Int. Cl.: G02B 7/00, G02B 7/182

(54) **OPTICAL MOUNT WITH SPRING RETENTION MECHANISM**

(30) Priority: 06.01.2025 US 202563742064 P; 29.12.2025 US 202519435651
(71) Applicant: Thorlabs, Inc., Newton, NJ 07860 (US)
(72) Inventor: D'Alessio, Brett, Newton, NJ, 07860 (US)
(74) Representative: Grättinger Möhring von Poschinger Patentanwälte Partnerschaft mbB

(57) **Abstract**

An optical mount with a spring retention mechanism, including: a first plate; a second plate; and a corresponding plurality of springs, each spring being accommodated in a pair of matched first and second holes; wherein each of the plurality of springs forms a spring body having a body radius centered from the spring axis, a first engagement member, and a second engagement member; wherein for each first hole, the first plate further comprises a first receiver; wherein for each second hole, the second plate further comprises a second receiver; and wherein when the first engagement member of a spring is in the first receiver of the first plate and the second engagement member of the spring is in the corresponding second receiver of the second plate, the spring is in an extended state with a spring tension force that holds the first and second plates together.

## Description

### TECHNICAL FIELD

The present disclosure generally relates to an optical mount with a spring retention mechanism.

### BACKGROUND

In some embodiments, a kinematic optic mount uses extension springs to generate the forces to hold the two translating structural members of the system together. The springs in these mounts have partial or full loop ends at each end of the spring coil. The loops are held in place with dowel pins, screws, spring stud anchors, or spring hangers. All these methods of holding the spring may require machining of a pocket to hold the dowel pins in place or machining of threaded holes to hold the screws, spring stud anchors, or spring hangers in place. The assembly is also more complicated because both the spring and the spring retention members must be handled and installed. The additional spring retention components also produce unwanted metal chips when screwed into place. Moreover, the additional components can loosen up over time or when exposed to shock and vibration causing the assembly to fall apart. The spring retention methods also may require more space on the frame to be mounted.

There may be a need for a smaller product that has a requirement to be used in a vacuum system and the spring retention dowels, screws, and hangers might need to be custom made to meet the vacuum systems materials requirements. The spring retention methods would not fit on the smaller product that was being designed. Furthermore, this product had an aggressive price point that required a design that could be manufactured and assembled in less time.

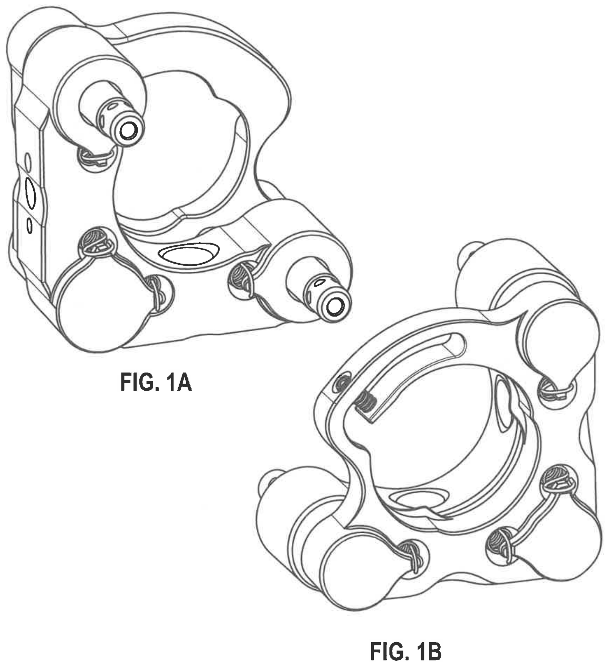

For example, on some mounts, an attempt was made by Applicant to machine monolithic spring hooks into the kinematic mounts that work with standard type extension springs and they work well, but they may need to be machined to tight tolerances because the spring hook and spring hole are competing for the same space, the machined features are time consuming to produce, and during assembly the springs may need to be manipulated through the spring bore, around the hook and then set into place. This all translated to a high-cost solution that takes up additional product space. FIGS. 1A and 1B show an example of extension springs being held in place with spring hooks.

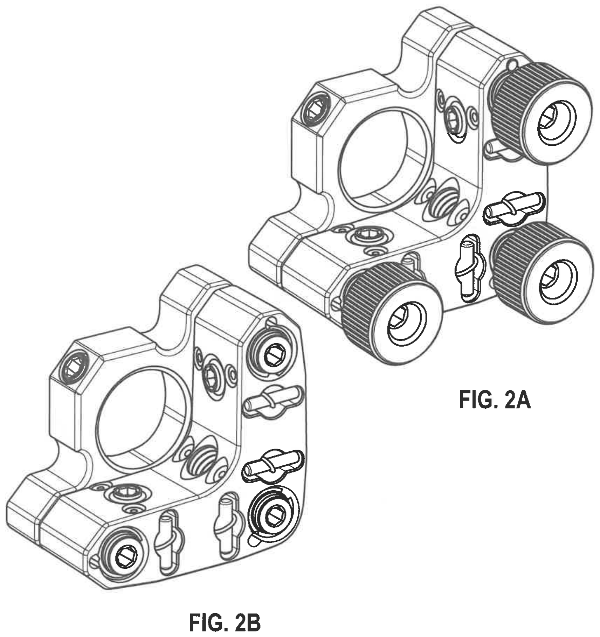

In some cases, dowel pins are used for holding extension springs into kinematic mounts. They may require the use of a dowel pin on each side of the spring and pockets need to be created to hold the dowel pins in place. Most of the dowel pins used are also made from hardened steel and rust over time. They are also difficult to install and require a skilled assembler to professionally install them. The dowel pins and pockets also take up additional space and require the product to be larger in size. FIGS. 2A and 2B show an example of extension springs being held in place with dowel pins that are set into dowel pin pockets.

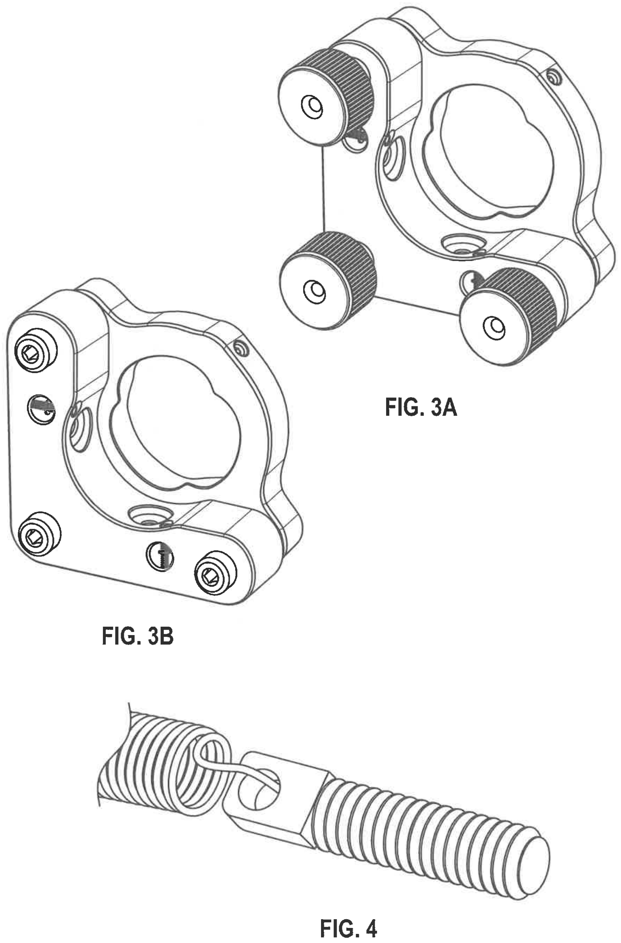

Screws are also used to hold spring loops into place but require the machining of threaded holes perpendicular to the springs to work. The spring loops are not large enough to fit both the hook on the spring pulling tool and the spring retention screw resulting in a stretched spring loop. Because of this Applicant may need to have custom springs made with larger spring loops and also have custom spring pulling tools made with small supper alloy hooks to provide more room for the spring retention screw. The custom spring pulling tools have such small hooks that they may not last long and need to be replaced often. FIGS. 3A and 3B show an example of extension springs being held in place with screws.

Another method of holding extension springs is to use extension spring stud anchors. The use of extension spring stud anchors may require threaded holes to be added to the frame, they are expensive, take-up additional space and require additional time to install. FIG. 4 shows an example of extension spring stud anchors, which is a method of anchoring extension springs within the machine design industry.

Therefore, there is a long-felt need for a technical design that does not have the above-mentioned shortcomings in existing designs.

The description provided in the background section should not be assumed to be prior art merely because it is mentioned in or associated with the background section. The background section may include information that describes one or more aspects of the subject technology.

### SUMMARY

An embodiment of the present disclosure provides an optical mount with a spring retention mechanism, including: a first plate having a plurality of first holes at plurality of locations on the first plate; a second plate having a corresponding plurality of second holes at corresponding plurality of locations on the second plate, such that when the second plate is aligned with the first plate, the plurality of first holes match with the corresponding plurality of second holes; and a corresponding plurality of springs, each spring being accommodated in a pair of matched first and second holes; wherein each of the plurality of springs is formed by wounding a metal wire around a spring axis to form a spring body having a body radius centered from the spring axis, a first engagement member at a first end of the spring body, and a second engagement member at a second end of the spring body; wherein the holes in the first and second plates are sized to allow the springs to pass through when the springs are flexed in a transversal direction relative to the spring axis; wherein for each first hole, the first plate further comprises a first receiver configured to receive the first engagement member; wherein for each second hole, the second plate further comprises a second receiver configured to receive the second engagement member; and wherein when the first engagement member of a spring is in the first receiver of the first plate and the second engagement member of the spring is in the corresponding second receiver of the second plate, the spring is in an extended state with a spring tension force that holds the first and second plates together.

In some embodiments of the present disclosure, the first receiver is formed on a surface of the first plate that faces away from the second plate, and/or the second receiver is formed on a surface of the second plate that faces away from the first plate.

In some embodiments of the present disclosure, the first engagement member includes a first hook. The first hook comprises a first arm extending from a circumferential location at the first end, parallel to the spring axis and away from the first end, which is followed by a first loop bending away from the spring axis and changing directions from away to towards the first end, and which is followed by a first cleat extending parallel to the spring axis and towards the first end, forming a first gap between the first arm and first cleat.

In some embodiments of the present disclosure, the first receiver includes a first cleat receiver configured to accommodate the first cleat.

In some embodiments of the present disclosure, sizes and locations of the first receivers are respective configured based on dimensions of the first cleats, and/or a distance of the first gap, and sizes of the bores are configured based on the radius of the coil end section.

In some embodiments of the present disclosure, the second engagement member includes a second hook. The second hook comprises a second arm extending from a 180-degree offset of the first circumferential location at the second end, parallel to the spring axis and away from the second, followed by a second loop bending away from the spring axis and changing directions from away to towards the second end, and which is followed by a second cleat extending parallel to the spring axis and towards the second end, forming a second gap between the second arm and second cleat.

In some embodiments of the present disclosure, the second receiver includes a second cleat receiver configured to accommodate the second cleat.

In some embodiments of the present disclosure, a size of the first and second holes is configured based on the body radius of the springs, a transverse flexing dimension of the spring, a length of the first arm, a length of the second arm, a distance of the first gap and/or a distance of the second gap.

In some embodiments of the present disclosure, the first and second holes are elliptical to allow for larger transverse flexing dimension of the spring, the length of the first arm, the length of the second arm, the distance of the first gap and/or the distance of the second gap.

In some embodiments of the present disclosure, the second engagement member includes a coil end section having a coil radius larger than the body radius, and the second receiver includes a bore concentric to one of the second holes and sized to accommodate the coil end section.

In some embodiments of the present disclosure, sizes and locations of the first and second receivers are respective configured based on dimensions of the first and second cleats, the distance of the first gap and/or the distance of the second gap.

In some embodiments of the present disclosure, the first and second engagement members are configured to allow access for a spring pulling tool to grab the springs.

### BRIEF DESCRIPTION OF THE DRAWINGS

FIGS. 1A and 1B show an example of extension springs being held in place with spring hooks.
FIGS. 2A and 2B show an example of extension springs being held in place with dowel pins that are set into dowel pin pockets.
FIGS. 3A and 3B show an example of extension springs being held in place with screws.
FIG. 4 shows an example of extension spring stud anchors, which is a method of anchoring extension springs within the machine design industry.
FIG. 5 shows a design of spring according to one embodiment of the present disclosure.
FIG. 6 shows a side view of implementing the spring retention components and assembly according to one embodiment of the present disclosure.
FIG. 7 shows a perspective view of implementing the spring retention components and assembly according to one embodiment of the present disclosure.
FIG. 8 shows another perspective view of implementing the spring retention components and assembly according to one embodiment of the present disclosure.
FIG. 9 shows a design of spring according to one embodiment of the present disclosure.
FIG. 10 shows a side view of implementing the spring retention components and assembly according to one embodiment of the present disclosure.
FIG. 11 shows a perspective view of implementing the spring retention components and assembly according to one embodiment of the present disclosure.
FIG. 12 shows a close-up view of implementing the spring retention components and assembly according to one embodiment of the present disclosure.
FIG. 13 shows another close-up view of implementing the spring retention components and assembly according to one embodiment of the present disclosure.
FIG. 14 shows another close-up view of implementing the spring retention components and assembly according to one embodiment of the present disclosure.

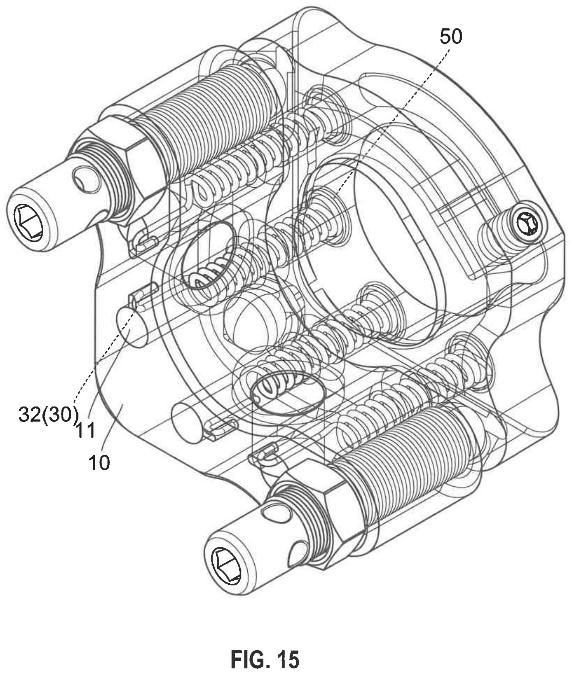

FIG. 15 shows another perspective view of implementing the spring retention components and assembly according to one embodiment of the present disclosure.
FIGS. 16A-16C show top, front, and back views of an optical mount according to one embodiment of the present disclosure.
FIG. 16D shows a cross-sectional view taken along XVI-XVI line in FIG. 16C.
FIG. 17 shows an enlarged view of implementing the spring retention components according to one embodiment of the present disclosure.
FIGS. 18A-18B show views of a spring according to one embodiment of the present disclosure.
FIG. 19 shows a flexing of a spring according to one embodiment of the present disclosure.
FIGS. 20A-20C show top, front, and back views of an optical mount according to one embodiment of the present disclosure.
FIG. 20D shows a cross-sectional view taken along XX-XX line in FIG. 20C.
FIG. 21 shows the force vectors created by the spring according to one embodiment of the present disclosure.

### DETAILED DESCRIPTION

The description of illustrative embodiments according to principles of the present disclosure is intended to be read in connection with the accompanying drawings, which are to be considered part of the entire written description. In the description of embodiments of the disclosure disclosed herein, any reference to direction or orientation is merely intended for convenience of description and is not intended in any way to limit the scope of the present disclosure. Relative terms such as "lower," "upper," "horizontal," "vertical," "above," "below," "up," "down," "top" and "bottom" as well as derivative thereof (e.g., "horizontally," "downwardly," "upwardly," etc.) should be construed to refer to the orientation as then described or as shown in the drawing under discussion. These relative terms are for convenience of description only and do not require that the apparatus be constructed or operated in a particular orientation unless explicitly indicated as such. Terms such as "attached," "affixed," "connected," "coupled," "interconnected," and similar refer to a relationship wherein structures are secured or attached to one another either directly or indirectly through intervening structures, as well as both movable or rigid attachments or relationships, unless expressly described otherwise. Moreover, the features and benefits of the disclosure are illustrated by reference to the exemplified embodiments. Accordingly, the disclosure expressly should not be limited to such exemplary embodiments illustrating some possible non-limiting combination of features that may exist alone or in other combinations of features; the scope of the disclosure being defined by the claims appended hereto.

This disclosure describes the best mode or modes of practicing the disclosure as presently contemplated. This description is not intended to be understood in a limiting sense, but provides an example of the disclosure presented solely for illustrative purposes by reference to the accompanying drawings to advise one of ordinary skill in the art of the advantages and construction of the disclosure. In the various views of the drawings, like reference characters designate like or similar parts.

It is important to note that the embodiments disclosed are only examples of the many advantageous uses of the innovative teachings herein. In general, statements made in the specification of the present application do not necessarily limit any of the various claimed disclosures. Moreover, some statements may apply to some inventive features but not to others. In general, unless otherwise indicated, singular elements may be in plural and vice versa with no loss of generality.

An embodiment of the present disclosure allows the spring to be mounted to both sides of the two translating structural members with no additional hardware. The spring is designed so one end self-secures into one end of the kinematic frame and the other end is pulled into place using a built-in hook loop that is simply pulled with a spring hook tool and dropped into a retention hole on the second kinematic frame. Alternatively, the special hook design provides for a method to pull the spring, allows enough rotation to align the spring finger with the spring retention hole, provides for the spring retention, and the side walls of the spring finger and the spring hook cleat hold the spring in place so it stays concentric to the spring hole.

An embodiment of the present disclosure provides a design that saves space on the product, allowing more space for more important functionality such as needed material for structural stiffness and room for needed features. In some embodiments, the design eliminates components, reduces machining time, and reduces assembly time, this all translates to lower product cost. Some embodiments of the present disclosure may reduce the generation of metal chips and supports the requirements for use in vacuum systems and low outgassing laser systems. This modem design is also simple and elegant allowing for a more modern looking product design.

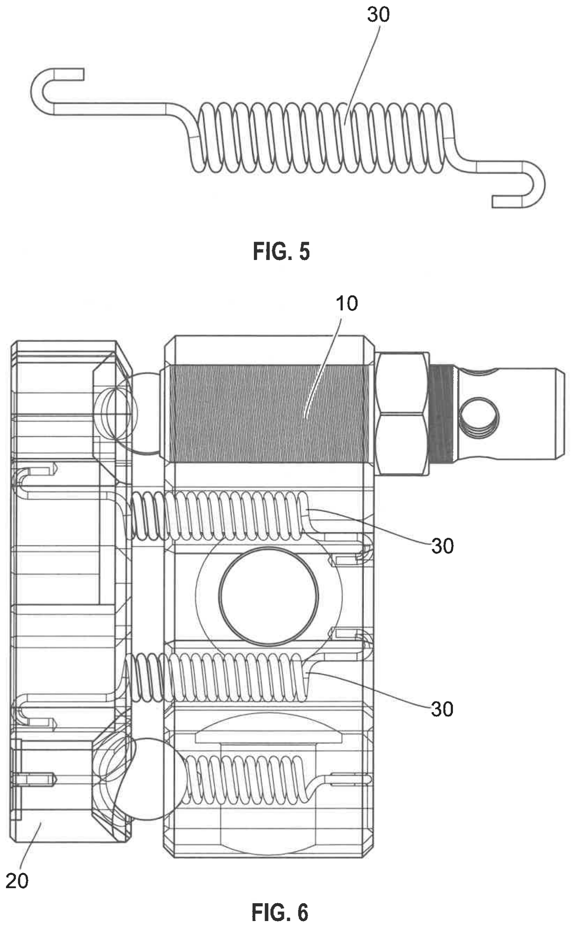

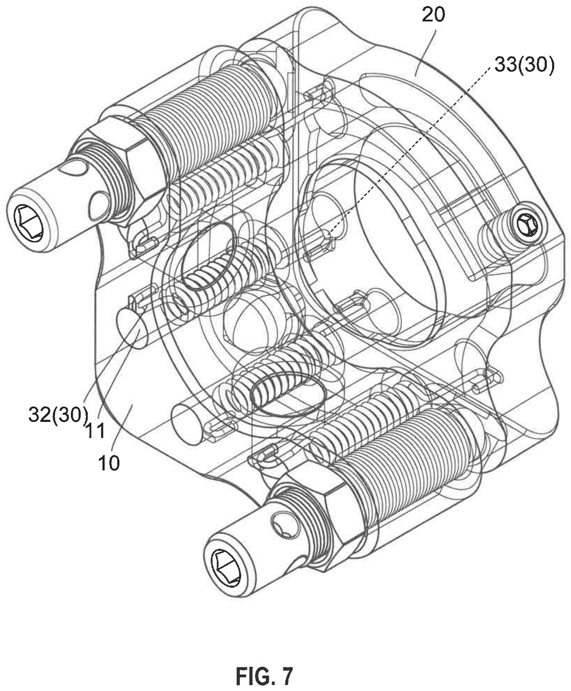

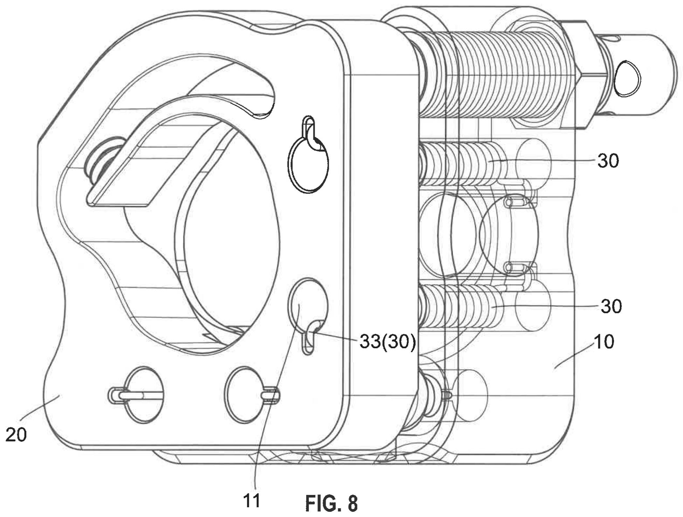

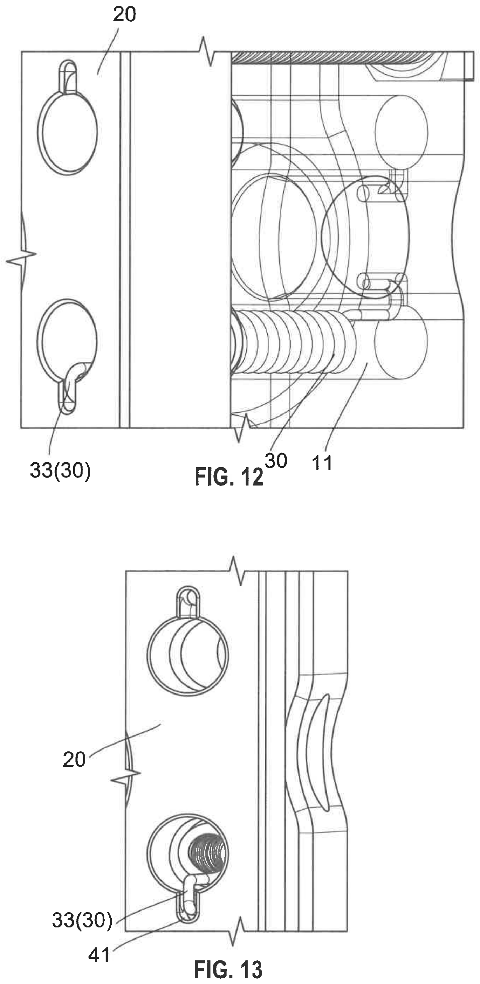

To overcome the shortcomings as mentioned in the background section, a spring design as shown in FIG. 5 may be used according to one embodiment. This spring design has a built-in spring hanger hook that can be placed directly into a hole in the frame member to be sprung. This may eliminate the need for additional components such as screws, dowel pins, extension spring stud anchors or spring hanger hooks. On the mating frame members, a hole may be drilled to accept the spring. FIGS. 6 - 8 are different views of implementing the spring retention components and assembly according to this embodiment. FIG. 12 shows a part (front plate or back plate) of a kinematic optical mount with holes for accommodating the hooks at a first end of the respective springs, and FIG. 13 shows a mated part (back plate or front plate) of the kinematic optical mount with holes for accommodating the hooks at a second end of the respective springs.

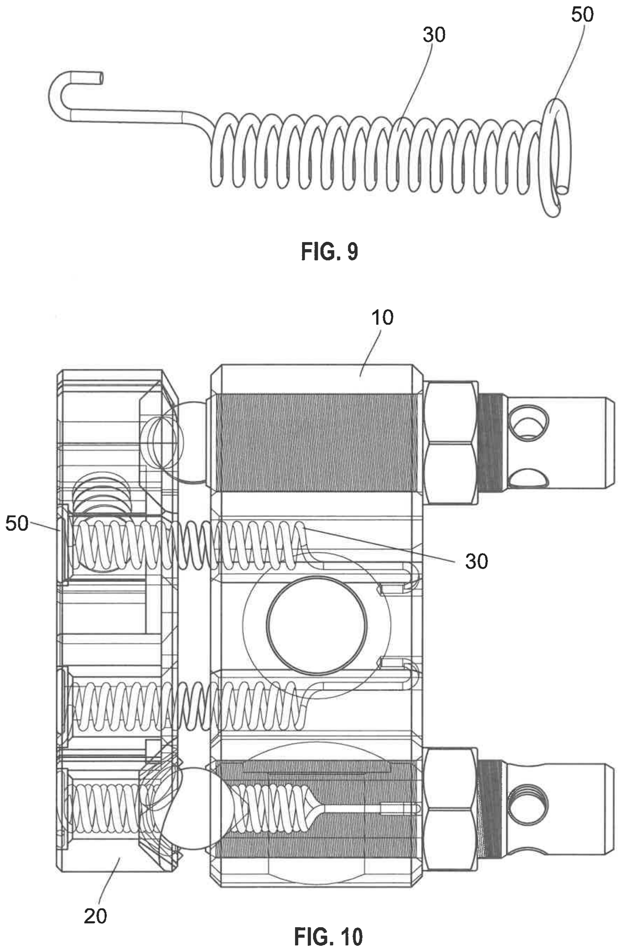

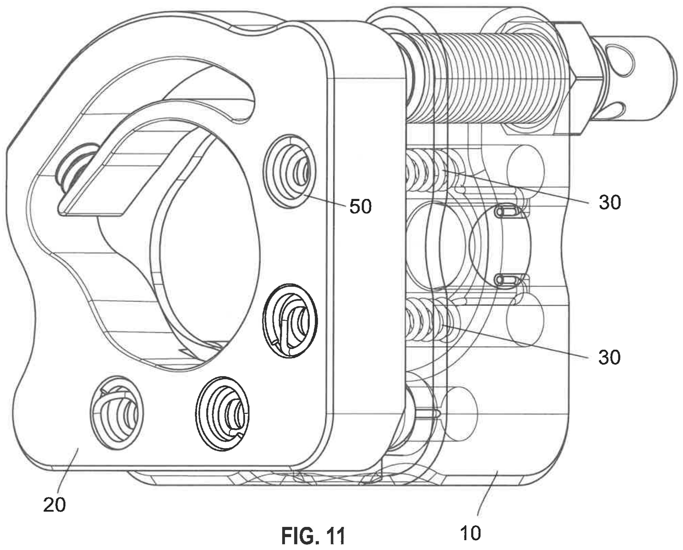

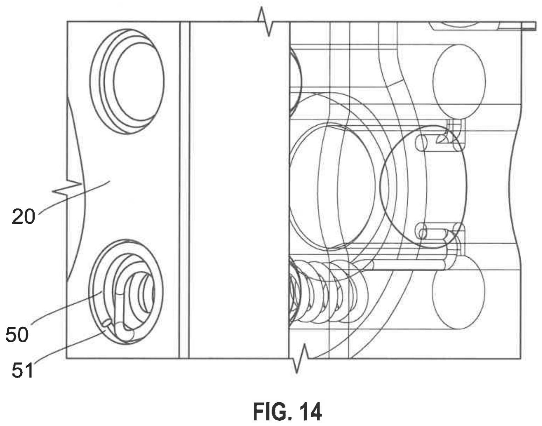

In an alternative design as shown in FIG. 9 according to one embodiment, one end of the spring has a larger diameter coil to retain one end of the spring. FIGS. 10 - 11 are different views of the components and assembly according to this embodiment. The part shown in FIG. 13 may be also used for accommodating the hook at the first end of the spring shown in FIG.9. FIG. 14 shows the mated part with spring retention pocket for accommodating the larger diameter part at the second end of the spring.

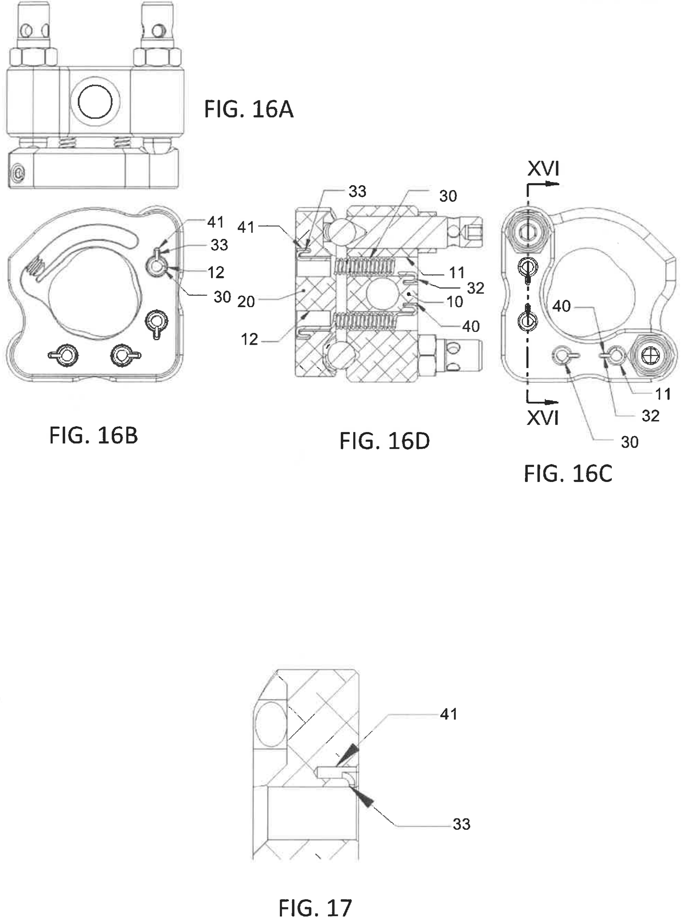

FIGS. 16A-16C show top, front, and back views of an optical mount according to one embodiment of the present disclosure. FIG. 16D shows a cross-sectional view taken along XVI-XVI line in FIG. 16C. The configuration of FIGS. 16A-16D is shown in FIGS. 5-8, 12, and 13.

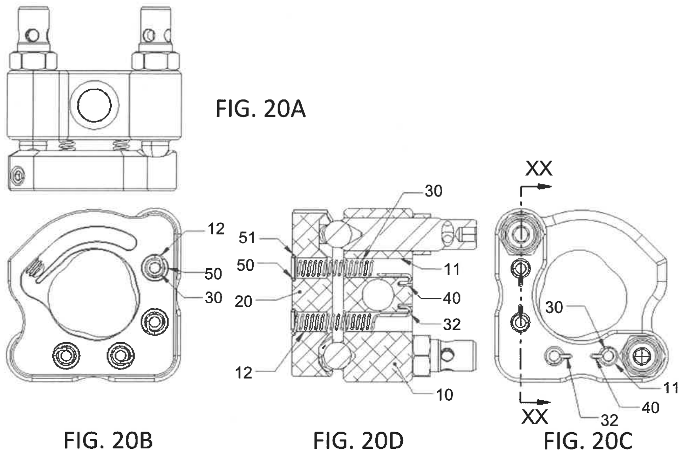

FIGS. 16A-16D show the extension spring 30 with the extension spring retention hooks (which may be first and second hooks) 32 and 33, which are examples of engagement members. Engagement members are not limited to hooks, and other configurations may be possible, such as a coil end section shown in FIG. 20D. The extension spring sits inside the spring holes (which may be first and second holes) 11 and 21. The extension spring retention hooks 32 and 33 are held in place by the extension spring retention hook receivers (which may be first and second receivers) 40 and 41. The extension spring retention hook receivers 40 and 41 are located within the kinematic optic mount back plate (which may be a first plate) 10 and kinematic optic mount front plate (which may be a second plate) 20. The spring hole(s) 11, 21 can be either round as shown or in an elongated counter slot shape to allow for greater spring translation angles. FIG. 17 is an enlarged view of the spring hook 33 is held in place by the spring retention hook receiver 41.

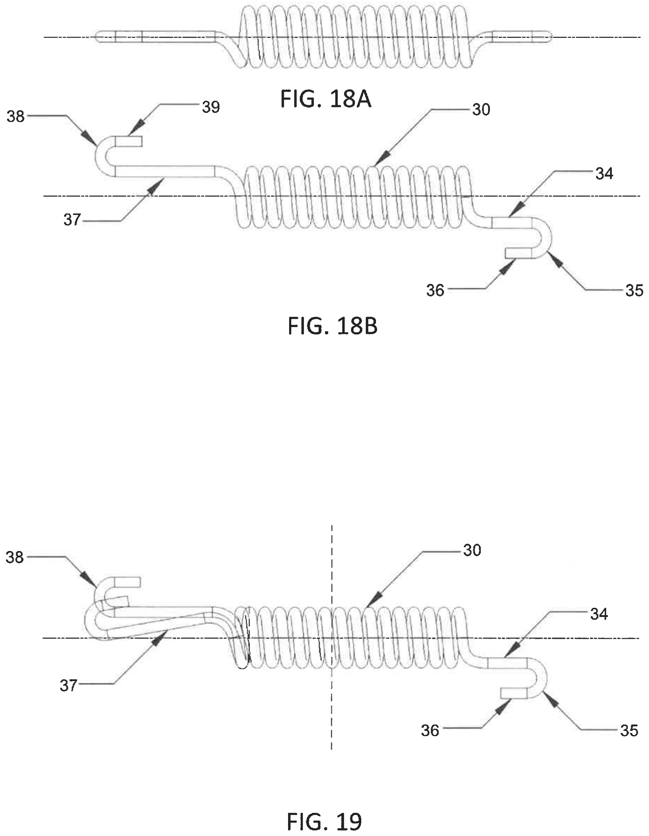

FIGS. 18A and 18B show views of the extension spring details. The extension spring 30 has spring arms (which may be first and second arms) 34 and 37, each of which extends out from the spring on either end of the spring. The spring arm can flex allowing it to fit through a hole that is smaller than the overall spring package size itself. The spring hook loops (which may be first and second loops) 35 and 38 allow access for a spring pulling tool to grab the spring so it can be pulled into place. The spring hook loops 35 and 38 also hold the extended spring in place countering the spring forces and controlling the length of the spring. The spring cleats (which may be first and second cleats) 36 and 39 hold the spring in its location within the spring holes, keeping the spring concentric to the spring bore clearance hole it is mounted within. In FIG. 19, the spring arms 34 and 37 are shown with the arm 37's flexing motion allowing it to flex, change shape and pass through tight spring holes.

FIGS. 20A-20C shows top, front, and back views of an optical mount according to one embodiment of the present disclosure. FIG. 20D shows a cross-sectional view taken along XX-XX line in FIG. 20C. The configuration of FIGS. 20A-20D is shown in FIGS. 9-11 and 14. In FIGS. 20A-20D, the same or similar elements shown in FIGS. 16A-19 are indicated with the same reference numerals as in FIGS. 16A-19.

FIGS. 20A-20D show the extension spring 30 with the extension spring retention hook 32 on one side and the alternative extension spring retention coil including a coil end section 50, which may be an example of an engagement member, on the other side. The extension spring sits inside the spring holes 11 and 12. The extension spring retention pocket 51, which may be a bore, holds one end (e.g., the coil end section 50) of the spring in place and the extension spring retention hook 32 is held in place by the extension spring retention hook receivers 40 on the other end of the spring. The extension spring retention pocket 51 and the extension spring retention hook receiver 40 can be located within either the kinematic optic mount back plate 10 or the kinematic optic mount front plate 20.

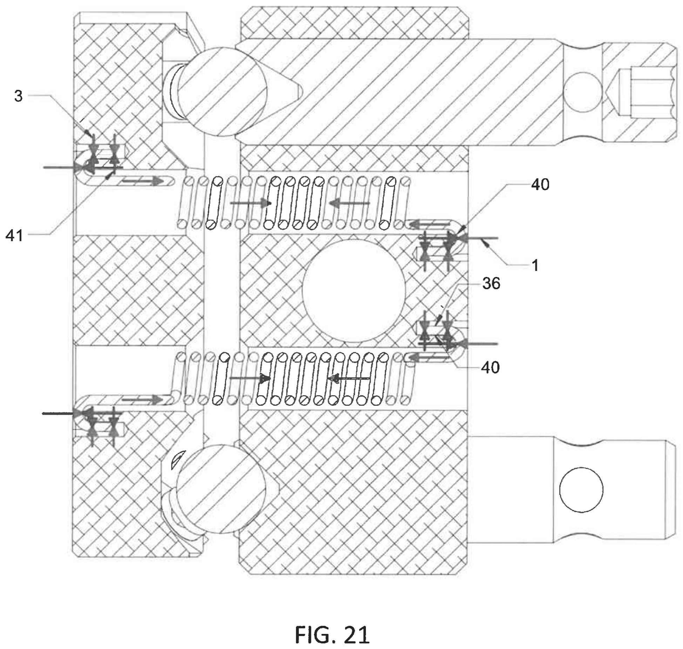

FIG. 21 shows the force vectors created by the spring. The spring tension forces 1 are carried from the spring coils, up through the spring arm and onto the spring hook and then counteracted by the extension spring retention hook receivers 40 and 41 on the frame. The off-center spring hook would normally cause a torque on the spring causing the spring coils to deform and twist out of shape. These deformed springs are typically seen on break drum assemblies, carburetor linkages, etc. In this embodiment, the spring hook is prevented from rotating by the spring hook cleat 36 that is held in place by the extension spring retention hook receiver 40 in the frame. The springs rotational forces 3 are countered by the extension spring retention hook receiver 41. The spring arm is also held into position by the wall of the spring bore. Both springs are mounted in opposite orientations to counter any resulting side acting forces. This all results in a properly oriented spring and resulting spring force, making this spring and spring retention technique suitable for use in precision optomechanical instrumentation.

The advantages of the design according one embodiment are that it requires less components, the reduction in components increases reliability, reduces production cost due to the simplicity of the features and allows for faster assembly.

While the present disclosure describes at some length and with some particularity with respect to the several described embodiments, it is not intended that it should be limited to any such particulars or embodiments or any particular embodiment, but it is to be construed so as to provide the broadest possible interpretation in view of the related art and, therefore, to effectively encompass various embodiments herein. Furthermore, the foregoing describes various embodiments foreseen by the inventor for which an enabling description was available, notwithstanding those modifications of the disclosure, not presently foreseen, may nonetheless represent equivalents thereto.

## Claims

1. An optical mount with a spring retention mechanism, comprising:
a first plate (10) having a plurality of first holes (11) at plurality of locations on the first plate;
a second plate (20) having a corresponding plurality of second holes (21) at corresponding plurality of locations on the second plate, such that when the second plate is aligned with the first plate, the plurality of first holes match with the corresponding plurality of second holes; and
a corresponding plurality of springs (30), each spring being accommodated in a pair of matched first and second holes;
wherein each of the plurality of springs is formed by wounding a metal wire around a spring axis to form a spring body (31) having a body radius centered from the spring axis, a first engagement member (32) at a first end of the spring body, and a second engagement member (33) at a second end of the spring body;
wherein the holes in the first and second plates are sized to allow the springs to pass through when the springs are flexed in a transversal direction relative to the spring axis;
wherein for each first hole, the first plate further comprises a first receiver (40) configured to receive the first engagement member;
wherein for each second hole, the second plate further comprises a second receiver (41) configured to receive the second engagement member; and
wherein when the first engagement member of a spring is in the first receiver of the first plate and the second engagement member of the spring is in the corresponding second receiver of the second plate, the spring is in an extended state with a spring tension force that holds the first and second plates together.

2. The optical mount of claim 1, wherein the first receiver is formed on a surface of the first plate that faces away from the second plate, and/or wherein the second receiver is formed on a surface of the second plate that faces away from the first plate.

3. The optical mount of claim 1 or 2, wherein the first engagement member includes a first hook (32), and wherein the first hook comprises a first arm (34) extending from a circumferential location at the first end, parallel to the spring axis and away from the first end, which is followed by a first loop (35) bending away from the spring axis and changing directions from away to towards the first end, and which is followed by a first cleat (36) extending parallel to the spring axis and towards the first end, forming a first gap between the first arm and first cleat.

4. The optical mount of claim 3, wherein the first receiver includes a first cleat receiver configured to accommodate the first cleat.

5. The optical mount of claim 3 or 4, wherein sizes and locations of the first receivers are respective configured based on dimensions of the first cleats, and/or a distance of the first gap, and sizes of the bores are configured based on the radius of the coil end section.

6. The optical mount of any of claims 3-5, wherein the second engagement member includes a second hook (33), and wherein the second hook comprises a second arm (37) extending from a 180-degree offset of the first circumferential location at the second end, parallel to the spring axis and away from the second, followed by a second loop (38) bending away from the spring axis and changing directions from away to towards the second end, and which is followed by a second cleat (39) extending parallel to the spring axis and towards the second end, forming a second gap between the second arm and second cleat.

7. The optical mount of claim 6, wherein the second receiver includes a second cleat receiver configured to accommodate the second cleat.

8. The optical mount of claim 6, wherein a size of the first and second holes is configured based on the body radius of the springs, a transverse flexing dimension of the spring, a length of the first arm, a length of the second arm, a distance of the first gap and/or a distance of the second gap.

9. The optical mount of claim 8, wherein the first and second holes are elliptical to allow for larger transverse flexing dimension of the spring, the length of the first arm, the length of the second arm, the distance of the first gap and/or the distance of the second gap.

10. The optical mount of any of claims 1-5, wherein the second engagement member includes a coil end section (50) having a coil radius larger than the body radius, and
the second receiver includes a bore (51) concentric to one of the second holes and sized to accommodate the coil end section.

11. The optical mount of claim 10, wherein sizes and locations of the first and second receivers are respective configured based on dimensions of the first and second cleats, the distance of the first gap and/or the distance of the second gap.

12. The optical mount of any of claims 1-11, wherein the first and second engagement members are configured to allow access for a spring pulling tool to grab the springs.
